Europäisches Patentamt

European Patent Office

Office européen des brevets

(19)

(11) Veröffentlichungsnummer: **0 402 769**
**A1**

(12) **EUROPÄISCHE PATENTANMELDUNG**

(21) Anmeldenummer: 90110792.0

(22) Anmeldetag: 07.06.90

(51) Int. Cl.⁵: **A01N 25/22, A01N 25/30,
A01N 47/30, A01N 39/00,
A01N 39/02, A01N 39/04,
A01N 57/20, A01N 43/40**

(30) Priorität: **10.06.89 DE 3919036**

(43) Veröffentlichungstag der Anmeldung:
**19.12.90 Patentblatt 90/51**

(84) Benannte Vertragsstaaten:
**AT BE CH DE DK ES FR GB GR IT LI NL SE**

(71) Anmelder: **HOECHST AKTIENGESELLSCHAFT
Postfach 80 03 20
D-6230 Frankfurt am Main 80(DE)**

(72) Erfinder: **Frisch, Gerhard, Dr.
Westerwaldstrasse 7
D-6390 Wehrheim(DE)**

(54) **Flüssige herbizide Mischformulierungen.**

(57) Bei Mischformulierungen von wasserlöslichen salzartigen Wirkstoffen mit in Wasser unlöslichen Wirkstoffen treten je nach Zusammensetzung häufig Stabilitätsprobleme und besonders durch Kristallwachstum bedingte Instabilitäten und Änderungen in der biologischen Verfügbarkeit der Wirkstoffe auf.
Die Erfindung betrifft besonders stabile Mischformulierungen auf Basis von Linuron und salzartig gelösten Wirkstoffen aus der Gruppe der Phenoxyessig- und -propionsäuren, Glufosinate, Glyphosate, Dimethylphosphinoylhydroxyessigsäure und 1,1′-Dimethyl-4,4′-bipyridiniumchlorid. Formulierungshilfsmittel sind im wesentlichen Ligninsulfonate und Salze polymerisierter Alkylnaphthalinsulfonsäuren.

EP 0 402 769 A1

## Flüssige herbizide Mischformulierungen

Die Erfindung betrifft flüssige herbizide Mischformulierungen mit Linuron. Flüssige herbizide Mischformulierungen sind solche, bei denen mindestens 2 Wirkstoffe in der anwendungsfertigen Formulierung vorliegen. Mischformulierungen sind häufig vorteilhaft gegenüber Einzelformulierungen, weil beispielsweise durch Wirkstoffkombinationen eine Wirkungsverbesserung erreicht oder das phytotoxische Verhalten der Herbizide deutlich verbessert werden kann. Weiterhin können die anwendungstechnischen Eigenschaften verbessert und Verpackungen minimiert werden. Bekannt sind solche Mischformulierungen schon beispielsweise von Isoproturon und CMPP Salzlösungen (EP-A 0 130 370) oder von Glufosinate, Simazin und Diuron (EP-A 297 305). In diesen Beispielen liegen die Wirkstoffe Isoproturon bzw. Diuron + Simazin in feinverteilter, fester Form, CMPP bzw. Glufosinate in Salzform in wäßriger Lösung vor. Diese in fester Form dispergierten Wirkstoffe haben Wasserlöslichkeiten von höchstens 55 mg/l Wasser bei 20°C, so daß die Gefahr des Kristallwachstums bei üblichen Lagertemperaturen von -10° bis +50°C vergleichsweise minimal ist. Kristallwachstum in den Formulierungen ist zu vermeiden, weil dies meist zur Instabilität der Dispersion führt. Außerdem ändert sich mit der Kristallgröße die biologische Verfügbarkeit der Wirkstoffe und damit die herbizide Wirkung bei der Anwendung der Formulierung. Bekannt ist weiterhin, daß man Wirkstoffen, die aufgrund ihrer höheren Löslichkeiten zum Beispiel in Wasser oder Ölen zu Kristallwachstum neigen, Farbstoffe zusetzt (EP-17879 (US-4441919), DE-A-2301922 (US-3987187)), die die Kristallisation hemmen können.

Es wurde nun gefunden, daß überraschenderweise bei Mischformulierungen von speziellen salzartigen Wirkstoffen mit dem fest dispergierten Herbizid 3-(3,4-Dichlorphenyl)-1- methoxy-1-methylharnstoff (Linuron), das eine Wasserlöslichkeit von etwa 81 mg/l Wasser bei 24°C hat, Kristallwachstum verhindert bzw. weitgehend unterdrückt werden kann, wenn man sich einer speziellen Tensidkombination bedient.

Gegenstand der Erfindung sind flüssige herbizide Zubereitungen (Mischformulierungen) mit einem Gehalt von

a) 1-40 Gew.-%, vorzugsweise 8 bis 35 Gew.-%, Linuron,

b) 1-55 Gew.-%, vorzugsweise 8-38 Gew.-%, mindestens eines salzartig gelösten Wirkstoffs aus der Gruppe enthaltend Salze von Phenoxyessig- und Phenoxypropionsäuren, Glufosinate, Glyphosate, Dimethylphosphinoylhydroxyessigsäure und 1,1'-Dimethyl-4,4'-bipyridiniumchlorid,

c) 0,5-20 Gew.-%, vorzugsweise 0,5-6 Gew.-%, eines Ligninsulfonats,

d) 0,1-10 Gew.-%, vorzugsweise 0,1-5 Gew.-%, eines Salzes einer polymerisierten Alkylnaphthalinsulfonsäure,

e) 0-25 Gew.-%. vorzugsweise 0 bis 15 Gew.-%, üblicher Hilfsmittel aus der Gruppe enthaltend Netzmittel, Entschäumer, Verdicker, Konservierungsmittel, Frostschutzmittel und das Eintrocknen verhindernde Zusätze und

f) 20-80 Gew.-%, vorzugsweise 30-65 Gew.-%, Wasser.

Linuron (Bestandteil a) ist in der Mischformulierung hauptsächlich als fester dispergierter Wirkstoff und nur zu einem geringen Teil in gelöster Form enthalten.

Die salzartig gelösten Wirkstoffe sind bevorzugt herbizid wirksame Phenoxyessig- bzw. Phenoxypropionsäurederivate in Form der Alkali-, Erdalkali- und gegebenenfalls substituierten Ammoniumsalze, insbesondere der Natrium-, Kalium- und Ammoniumsalze, wobei letztere durch 1 bis 3 Substituenten aus der Gruppe C$_1$-C$_4$-Alkyl, Hydroxyethyl, Hydroxypropyl, Polyethoxyethyl oder Amino-(C$_1$-C$_4$)-alkyl substituiert sein können; ebenso geeignet sind Salze von Glyphosate und Dimethylphosphinoylhydroxyessigsäure, insbesondere in den vorstehend analog genannten Salzformen, weiterhin 1,1'-Dimethyl-4,4'-bipyridiniumchlorid und insbesondere Glufosinate in den analog genannten möglichen Salzformen. Dabei können optisch aktive Verbindungen sowohl als racemisches Gemisch, als Gemisch mit überwiegendem Anteil eines Enantiomeren oder in enantiomerenreiner Form eingesetzt werden.

Die spezifisch genannten Herbizid-Wirkstoffe und einige ihrer Salze sind bekannt und zum großen Teil in Ch. R. Worthing's "The Pesticide Manual", A World Compendium, 8th Ed. (1987) by the British Crop Protection Council beschrieben, z.B.: Linuron auf Seiten 502/503, Substanz Nr. 7690; Glufosinate, d.h. 2-Amino-4-(hydroxy(methyl)phosphinoyl)butansäure auf Seite 448, Subst.-Nr. 6930; Glyphosate, d.h. N-(Phosphonomethyl)-glycin auf Seite 449, Subst.-Nr. 6950; 1,1'-Dimethyl-4,4'-bipyridiniumchlorid auf Seiten 630, 631, Subst.-Nr. 9320. Weiterhin sind in diesem Handbuch eine Reihe von erfindungsgemäß einsetzbaren Phenoxyessig- und Phenoxypropionsäure-Herbiziden, wie insbesondere Phenoxyphenoxy-, Pyridyloxyphenoxy- oder Heteroaryloxyphenoxyessigsäuren und -propionsäuren, beschrieben. Dimethylphosphinoylhydroxyessigsäure und einige ihrer Salze sind in EP-A 0 106 114 (US-A 4 594 098) beschrieben.

2

EP 0 402 769 A1

Die erfindungsgemäß in den herbiziden Mischformulierungen enthaltene Tensidkombination setzt sich vornehmlich aus den zwei Komponenten (c) und (d) zusammen, die erfindungsgemäß essentiell sind, um das Kristallwachstum des Linurons in einer Fertigmischung mit einem oder mehreren der salzartig gelösten Wirkstoffe zu verhindern. Neben diesen beiden Tensidkomponenten können in dieser Fertigmischung noch übliche Hilfmittel, z.B. Netzmittel wie Natriumsalze von Alkylethersulfaten mit 1 - 3 EO (EO = Ethyleneoxy-Einheiten) (z.B. ®Genapol LRO, HOECHST), Entschäumer auf Siliconbasis (beispielsweise die ®Silcolapse Reihe von ICI oder Antischaummittel SH von Fa. Wacker) vorhanden sein. Ebenso können anorganische und/oder organische Verdicker, beispielsweise auf Aluminumsilikat-, Xanthan-, Methylcellulose-, Polysaccharid-, Erdalkalisilikat-, Gelantine- und Polyvinylalkohol-Basis, Verwendung finden; ebenso, wenn nötig, entsprechende Konservierungsmittel wie beispielsweise solche auf Formaldehyd-, Benzoesäure- und Triphenylzinn-Basis. Wenn notwendig, können auch Frostschutzmittel zugesetzt werden, z. B. Harnstoff und Polyole wie Glykol, Propylenglykol, Glycerin und Zucker.

Als wirksame Tensidkombinationen, die im vorliegenden Fall das Kristallwachstum bei Linuron wirksam unterdrücken, kommen bevorzugt solche in Frage, die als Bestandteil (c) Ligninsulfonate in ihren möglichen Salzformen, z.B. [R]Vanisperse CB und/oder [R]Ufoxane 3A der Firma Borregard, Sarpsborg, Norwegen, und als Bestandteil (d) ein Na-Salz einer polymerisierten Alkyl-Naphthalinsulfonsäure wie [R]Darvan Nr. 1 (R.T. Vanderbuilt Comp. Norwalk, CT 06855, USA-Datenblatt 07.01.81) enthalten.

Die vorgenannten Tenside können besonders bevorzugt im Falle eines Ligninsulfonats (z. B. [R]-Vanisperse CB, [R]Ufoxane 3A) mit 1-6 Gew.-% und im Falle eines Na-Salzes einer polymerisierten Alkyl-Naphthalinsulfonsäure wie [R]Darvan Nr. 1) mit 0,5-4 Gew.-% eingesetzt werden.

Der Wirkstoff für die feste disperse Phase (Linuron) kann besonders bevorzugt in einer Menge von 10-20 Gew.-% und die salzartig gelösten Wirkstoffe (z. B. Glufosinate, Glyphosate) mit 10 bis 30 Gew.-% eingesetzt werden.

Herstellen lassen sich die erfindungsgemäßen herbiziden Mischformulierungen, indem man gemäß jeweiliger Rezeptur die Bestandteile (a) bis (f) in beliebiger Reihenfolge mischt und fein vermahlt. Vorzugsweise wird die Herstellung jedoch durchgeführt, indem man anteilig Wasser vorlegt und unter Rühren die Tenside (c) und (d) mit gegebenenfalls weiteren Hilfsstoffen (e) und dann die Wirkstoffe (a) und (b) hinzugibt. Die zunächst erhaltene Suspension wird dann (wenn notwendig auch nach vorausgegangener Vorzerkleinerung) mittels Reibkugelmühlen (z.B. Perlmühlen der Fa. Drais, Backofen, Netzsch) in bekannter Weise feinstvermahlen, wobei 90 % der Festpartikel bevorzugt deutlich kleiner als 10 μm sein sollten.

In der nachfolgenden Tabelle I sind Beispiele für Mischformulierungen aufgeführt, die anwendungstechnisch einwandfrei und lagerstabil sind. In der Tabelle II sind Vergleichsbeispiele zu finden, die starkes Kristallwachstum zeigen und/oder instabil sind, d.h. im Lagerversuch bei 50° C weniger als 3 Monate stabil sind. Bei den Vergleichsversuchen wurden z.B. Farbstoffe eingesetzt, die in bekannten Fällen Kristallwachstum bremsen; in anderen Beispielen der Tabelle II wurde wenigstens eines der als essentiell bezeichneten Tenside (c) und (d) gegen ähnliche ausgetauscht, wobei sich zeigte, daß mit der erfindungsgemäßen Tensidkombination deutlich bessere Effekte, wie z.B. Lagerstabilität oder geringeres Kristallwachstum erreicht wird.

In den Tabellen sind die Mengen als Gewichtsprozente zu verstehen, soweit nichts anderes angegeben ist.

Tabelle I

| | 1 | 2 | 3 | 4 | 5 | 6 | 7 | 8 | 9 | 10 | 11 | 12 |
|---|---|---|---|---|---|---|---|---|---|---|---|---|
| Glufosinate | 18,7 | 18,7 | 15,0 | 18,7 | 18,8 | 19,1 | | | 18,8 | 2 | 30 | 20,5 |
| Glyphosate | | | | | | | 12 | 12 | | | | |
| Linuron | 18,7 | 18,7 | 15,0 | 18,7 | 18,8 | 19,1 | 12 | 12 | 18,8 | 2 | 10 | 21,9 |
| Silcolapse 432 | 3 | 3 | 2,5 | 2,5 | 3 | 2,5 | 2,5 | 2,5 | 1 | 0,5 | 2 | |
| Antischaumm. SH | | | | | | | | | | | | 2 |
| Genapol LRO | 10 | 10 | 10 | 8 | 10 | 8 | 10 | 8 | | 2 | 5 | 8 |
| Darven Nr. 3 | 1 | 1 | 1 | 1,5 | 1 | 0,5 | 1 | 1 | 1 | | 1,5 | 1 |
| Darven Nr. 1 | 1 | 3 | 0,5 | 3 | 1 | 0,5 | 1 | 0,5 | 1 | 3 | 1 | 3 |
| Bentone EW | | | | 0,5 | | | | 0,3 | 0,5 | 1,5 | 0,5 | 0,2 |
| Vanisperse CB | 3 | 3 | 4 | 1 | 3 | | 3,0 | 4,0 | 5 | 3 | 6 | 1 |
| Ufoxane 3A | | | | | | 3 | | | | | | |
| Glycerin 98 % | | | 10 | 5 | | 5 | | 5,0 | 10 | 5 | | |
| Wasser | ad 100 % | | | | | | | | | | | |

Erläuterungen:

®Silcolapse 432 bzw. Antischaummittel SH = Entschäumer auf Siliconbasis

®Genapol LRO = ($C_{12}$-$C_{14}$-Alkyl)diglykolethersulfat Na-Salz

®Darvan Nr. 3 = Natriumsalz von polymerisierten substituierten Alkylbenzolsulfonsäuren + anorg. Suspendiermittel

®Darvan Nr. 1 = Natriumsalz von polymerisierten Alkylnaphthalinsulfonsäuren

®Bentone EW = Geliermittel (Verdicker) auf Basis von Magnesium-Montmorillonit

®Vanisperse CB = Natriumligninsulfonat (Sulfonierungsgrad 0,17 = Sulfonsäuregruppen je Phenylpropaneinheit)

®Ufoxane 3A = Natriumligninsulfonat (Sulfonierungsgrad 0,4)

Tabelle II

| | 1 | 2 | 3 | 4 | 5 | 6 | 7 | 8 | 9 | 10 |
|---|---|---|---|---|---|---|---|---|---|---|
| Glufosinate | 22 | 22 | 22 | 22 | 22 | 22 | 22 | 15,6 | 15,6 | |
| Glyphosate | | | | | | | | | | 12 |
| Linuron | 22 | 22 | 22 | 22 | 22 | 22 | 22 | 15,6 | 15,6 | 12 |
| Silcolapse 432 | 2,5 | 2,5 | 2,5 | 2,5 | 2,5 | 2,5 | 3 | 3 | | 2,5 |
| Genapol LRO | 8 | 8 | 8 | 8 | 8 | 8 | 10 | 10 | 8 | 8 |
| Darvan Nr. 3 | 0,5 | 0,5 | 0,5 | 0,5 | 0,5 | 0,5 | 1 | 1,5 | 1 | 1,5 |
| Darvan Nr. 1 | 0,5 | 0,5 | 0,5 | | | | 3 | 3 | | 3,0 |
| Bentone EW | | | | | | | | 0,2 | 0,1 | 0,3 |
| Vanisperse CB | | | | 1 | 1 | 1 | | | 2 | |
| Glycerin 98 % | 5 | 5 | 5 | 5 | 5 | 5 | | 5 | | |
| PV-Echtweiß R01 | | | | | | | | 0,5 | | |
| Soprophor PS15 | 3 | | | | | | 2 | | | |
| SE 2 | | | | | | | | | 4 | |
| Dispersant GN | | 3 | | | | | | | | |
| Dispersogen A | | | 3 | | | | | | | |
| Agrilan F 513 | | | | 2 | | | | | | |
| Soprophor 3D33 | | | | | 2 | | | | | |
| Fettrot 5B01 | | | | | | | 0,5 | | | |
| Hoe S 3727 | | | | | | | | | 5 | |
| Wasser | ad 100 % | | | | | | | | | |
| Erläuterungen: siehe Tabelle I und nächste Seite | | | | | | | | | | |

Erläuterungen zu Tabelle II:
Fettrot 5B01 = Solvent Red 27, Color Index Nr. 26125
PV-Echtweiß R01 = Pigment White 6, Color Index Nr. 77891
®Soprophor PS 15 = Alkylpolyethoxyetherphosphat (10-40 EO)
SE2 = Entschäumer auf Silikonbasis
Dispersant GN = Natriumphenylsulfonat
Dispersogen A = Naphthalinsulfonsäure-Formaldehyd-Kondensationsprodukt
Agrilan F 513 = Neutrales Salz eines komplexen organischen Phosphats
Soprophor 3D33 = Phosphorester eines ethoxylierten Arylphenols
Hoe S 3727 = Diphenylethersulfonsaures Formaldehyd-Kondensat, mit Triethanolamin neutralisiert

**Ansprüche**

1. Herbizide Zubereitung mit einem Gehalt an
   a) 1-40 Gew.-% Linuron,
   b) 1-55 Gew.-% mindestens eines salzartig gelösten Wirkstoffs aus der Gruppe enthaltend Salze von Phenoxyessig- und Phenoxypropionsäuren, Glufosinate, Glyphosate, Dimethylphosphinoylhydroxyessigsäure und 1,1'-Dimethyl-4,4'-bipyridiniumchlorid,
   c) 0,5-20 Gew.-% eines Ligninsulfonats,
   d) 0,1-10 Gew.-% eines Salzes einer polymerisierten Alkylnaphthalinsulfonsäure,
   e) 0-25 Gew.-% üblicher Hilfsmittel aus der Gruppe enthaltend Netzmittel, Entschäumer, Verdicker, Konservierungsmittel, Frostschutzmittel und das Eintrocknen verhindernde Zusätze und
   f) 20-80 Gew.-% Wasser.
2. Zubereitung nach Anspruch 1, dadurch gekennzeichnet, daß sie
   a) 8-35 Gew.-% Linuron,
   b) 8-38 Gew.-% mindestens eines salzartig gelösten Wirkstoffs aus der Gruppe enthaltend Salze von Phenoxyessig- und Phenoxypropionsäuren, Glufosinate, Glyphosate, Dimethylphosphinoylhydroxyessigsäure und 1,1'-Dimethyl-4,4'-bipyridiniumchlorid,
   c) 0,5-6 Gew.-% eines Ligninsulfonats,

5

EP 0 402 769 A1

d) 0,1-5 Gew.-% eines Salzes einer polymerisierten Alkylnaphthalinsulfonsäure,

e) 0-15 Gew.-% üblicher Hilfsmittel aus der Gruppe enthaltend Netzmittel, Entschäumer, Verdicker, Konservierungsmittel, Frostschutzmittel und das Eintrocknen verhindernde Zusätze und

f) 30-65 Gew.-% Wasser

enthält.

3. Zubereitung nach Anspruch 1 oder 2, dadurch gekennzeichnet, daß sie als Bestandteil (b) Glufosinate oder Glyphosate oder ein Gemisch davon in salzartig gelöster Form enthält.

4. Zubereitung nach einem oder mehreren der Ansprüche 1 bis 3, dadurch gekennzeichnt, das sie

a) 10 bis 20 Gew.-% Linuron,

b) 10 bis 30 Gew.-% Glufosinate, Glyphosate oder ein Gemisch davon in Form des jeweiligen Alkalimetall-, Erdalkalimetall-, Ammonium- oder mono- bis trisubstituierten Ammoniumsalzes,

c) 1 bis 6 Gew.-% eines Natriumligninsulfonats,

d) 0,5 bis 4 Gew.-% eines polymerisierten Alkyl-Naphthalinsulfonsäure-Na-Salzes

e) 0 bis 15 Gew.-% üblicher Hilfsmittel und

f) 30 bis 65 Gew.-% Wasser

enthält.

5. Zubereitung nach einem oder mehreren der Ansprüche 1 bis 4, dadurch gekennzeichnet, daß 90 % der Festpartikel kleiner als 10 $\mu$m sind.

6. Verfahren zur Herstellung der nach einem oder mehreren der Ansprüche 1 bis 5 definierten Zübereitung, dadurch gekennzeichnet, daß man die Bestandteile (c), (d), (e) und (f) unter Rühren vermischt, danach die Bestandteile (a) und (b) zufügt und anschließend mit üblichen Reibekugelmühlen fein vermahlt.

7. Verwendung der nach einem oder mehreren der Ansprüche 1 bis 5 definierten Zubereitung zum Bekämpfen von unerwünschtem Pflanzenwuchs.

Patentansprüche für folgenden Vertragsstaat: ES

1. Verfahren zur Herstellung einer herbiziden Zubereitung, dadurch gekennzeichnet, daß man

a) 1-40 Gew.-% Linuron,

b) 1-55 Gew.-% mindestens eines salzartig gelösten Wirkstoffs aus der Gruppe enthaltend Salze von Phenoxyessig- und Phenoxypropionsäuren, Glufosinate, Glyphosate, Dimethylphosphinoylhydroxyessigsäure und 1,1´-Dimethyl-4,4´-bipyridiniumchlorid,

c) 0,5-20 Gew.-% eines Ligninsulfonats,

d) 0,1-10 Gew.-% eines Salzes einer polymerisierten Alkylnaphthalinsulfonsäure,

e) 0-25 Gew.-% üblicher Hilfsmittel aus der Gruppe enthaltend Netzmittel, Entschäumer, Verdicker, Konservierungsmittel, Frostschutzmittel und das Eintrocknen verhindernde Zusätze und

f) 20-80 Gew.-% Wasser

in beliebiger Reihenfolge mischt und fein vermahlt.

2. Verfahren nach Anspruch 1, dadurch gekennzeichnet, daß als Bestandteile

a) 8-35 Gew.-% Linuron,

b) 8-38 Gew.-% mindestens eines salzartig gelösten Wirkstoffs aus der Gruppe enthaltend Salze von Phenoxyessig- und Phenoxypropionsäuren, Glufosinate, Glyphosate, Dimethylphosphinoylhydroxyessigsäure und 1,1´-Dimethyl-4 4´-bipyridiniumchlorid,

c) 0,5-6 Gew.-% eines Ligninsulfonats,

d) 0,1-5 Gew.-% eines Salzes einer polymerisierten Alkylnaphthalinsulfonsäure,

e) 0-15 Gew.-% üblicher Hilfsmittel aus der Gruppe enthaltend Netzmittel, Entschäumer, Verdicker, Konservierungsmittel, Frostschutzmittel und das Eintrocknen verhindernde Zusätze und

f) 30-65 Gew.-% Wasser

eingesetzt werden.

3. Verfahren nach Anspruch 1 oder 2, dadurch gekennzeichnet, daß als Bestandteil (b) Glufosinate oder Glyphosate oder ein Gemisch davon in salzartig gelöster Form eingesetzt werden.

4. Verfahren nach einem oder mehreren der Ansprüche 1 bis 3, dadurch gekennzeichnt, das als Bestandteile

a) 10 bis 20 Gew.-% Linuron,

b) 10 bis 30 Gew.-% Glufosinate, Glyphosate oder ein Gemisch davon in Form des jeweiligen Alkalimetall-, Erdalkalimetall-, Ammonium- oder mono- bis trisubstituierten Ammoniumsalzes,

c) 1 bis 6 Gew.-% eines Natriumligninsulfonats,

d) 0,5 bis 4 Gew.-% eines polymerisierten Alkyl-Naphthalinsulfonsäure-Na-Salzes

e) 0 bis 15 Gew.-% üblicher Hilfsmittel und

f) 30 bis 65 Gew.-% Wasser
eingesetzt werden.

    5. Verfahren nach einem oder mehreren der Ansprüche 1 bis 4, dadurch gekennzeichnet, daß nach dem Feinvermahlen 90 % der Festpartikel kleiner als 10 μm sind.

    6. Verfahren zur Herstellung der nach einem oder mehreren der Ansprüche 1 bis 5, dadurch gekennzeichnet, daß man die Bestandteile (c), (d), (e) und (f) unter Rühren vermischt, danach die Bestandteile (a) und (b) zufügt und anschließend mit üblichen Reibekugelmühlen fein vermahlt.

    7. Verwendung der nach einem oder mehreren der Ansprüche 1 bis 6 hergestellten Zubereitung zum Bekämpfen von unerwünschtem Pflanzenwuchs.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | **EP - B1 - 0 009 620** (HOECHST AKTIENGESELLSCHAFT) * Spalte 1, letzte Zeile - Spalte 4, Zeile 61; insbesondere Spalte 4, Zeilen 20-37 * -- | 1,7 | A 01 N 25/22 A 01 N 25/30 A 01 N 47/30 A 01 N 39/00 A 01 N 39/02 A 01 N 39/04 A 01 N 57/20 A 01 N 43/40 |
| A | **GB - A - 2 115 283** (ALBRIGHT AND WILSON) * Zusammenfassung; Seite 2, Zeile 120 - Seite 3, Zeile 43 * -- | 1,7 | |
| A | **DE - A1 - 2 657 583** (HOECHST AG) * Anspruch 1; Seite 4, Zeilen 13-18 * -- | 1,7 | |
| A | **DD - B - 206 620** (P. FRAJSTAK et al.) * Beispiele * ---- | 1 | |

**RECHERCHIERTE SACHGEBIETE (Int Cl⁵)**

A 01 N

Der vorliegende Recherchenbericht wurde für alle Patentansprüche erstellt.

| Recherchenort WIEN | Abschlußdatum der Recherche 12-09-1990 | Prüfer SCHNASS |
|---|---|---|